# EUROPEAN PATENT SPECIFICATION

(11) **EP 2 533 488 B1**
(45) Date of publication and mention of the grant of the patent: **26.08.2015**
(21) Application number: 12003920.1
(22) Date of filing: 18.05.2012
(51) Int. Cl.: G06F 21/60, H04L 29/06, H04L 9/08

(54) **Nfc communications device for setting up encrypted e-mail communication**
Nfc-Kommunikationsvorrichtung zur Einrichtung verschlüsselter E-Mail-Kommunikation
Dispositif de communication NFC pour la configuration de communication cryptée par e-mail

(30) Priority: 07.06.2011 US 201161494242 P; 21.06.2011 US 201113165440
(43) Date of publication of application: 12.12.2012
(73) Proprietor: Broadcom Corporation, Irvine, CA 92617 (US)
(72) Inventor: Kitchen, Robert, Stroud, GL6 8QL (GB)
(74) Representative: Jehle, Volker Armin

(56) References cited:
- US-A1- 2010 011 211
- SINCLAIR S ET AL: "PorKI: Making User PKI Safe on Machines of Heterogeneous Trustworthiness", COMPUTER SECURITY APPLICATIONS CONFERENCE, 21ST ANNUAL TUCSON, AZ, USA 05-09 DEC. 2005, PISCATAWAY, NJ, USA,IEEE, 5 December 2005 (2005-12-05), pages 419-430, XP010869960, DOI: 10.1109/CSAC.2005.43 ISBN: 978-0-7695-2461-0
- PHILIPP JAKUBEIT: "Implementation and Analysis of OpenPGP Functionality via NFC", Radboud Universiteit Nijmegen-Bachelorscripties , 13 July 2012 (2012-07-13), pages Frontpg.-39, XP002684068, Retrieved from the Internet: URL:http://www.cs.ru.nl/bachelorscripties/ 2012/Philipp_Jakubeit___0814881___Implemen tation_and_Analysis_of_OpenPGP_Functionali ty_via_NFC.pdf [retrieved on 2012-09-25]

## Description

### Field of the Invention

The present invention relates generally to Near Field Communication (NFC) devices and the operation and application thereof. More particularly, the present invention relates to methods and apparatus for using NFC communication devices to set up encrypted communications.

### Background

Advances in semiconductor manufacturing technologies have resulted in dramatically increased circuit packing densities and higher speeds of operation. In turn these advances have provided designers with the ability to produce many processor and communication functions that were not previously practical. In some instances these functions are combined in a single highly integrated device. In other instances these functions are partitioned into two or more devices or chips.

Advances in digital systems architecture, in combination with the advances in the speed and density of semiconductors, have resulted in the availability of substantial computing power and digital communications networks for relatively low cost. In turn, this has led to a vast installed base of computers and other computational resources each with the ability to communicate with others. One form of communication enabled by ubiquitous computational platforms and networks is electronic mail, more commonly referred to as email.

As more and more information passes over digital communications networks the possibility of sensitive information being observed by unintended recipients has increased. In order to preserve the privacy of such information, various cryptographic processes and techniques have been developed over the years.

Some cryptographic schemes require that a sender and a receiver possess a shared secret in order for a message to be encrypted by the sender and successfully decrypted by the receiver. For example, the Data Encryption Standard (DES) uses a symmetric key pair. A symmetric key pair refers to the encryption key of the sender being identical to the decryption key of the receiver. One drawback of a symmetric key cryptographic system is that both keys must remain secret in order that the communications between the sender and receiver remain secure.

Another type of cryptographic system, which overcomes a significant part of the key security issue of symmetric key cryptography, is referred to public key cryptography. Public key cryptography uses an asymmetric key pair. That is, the key used by the sender to encrypt a message is different from the key used by the receiver to decrypt the message. The key used to encrypt a message in this scheme is referred to as the public key, and the key used to decrypt the message is referred to as the private key. The public key/private key pair are generated together and are related such that a message encrypted with the public key can only be decrypted using the private key. One important advantage of public key (i.e., asymmetric key) cryptography over symmetric key cryptography is that only one key, rather than both, must be kept secret. In fact, the public key can be widely distributed since only the private key can decrypt a message encrypted with the public key.

Various public key cryptography systems have been developed. One well-known commercially available public key system is called PGP. PGP is an acronym that refers to "Pretty Good Privacy." PGP encryption software is commercially available that functions with an email client on a computational platform to produce encrypted email for sending to an intended recipient, and further produces decrypted, or plain text, versions of incoming encrypted emails. As noted above, various keys must be made available to a public key cryptography system, including PGP. The presence of these keys on a computational platform, such as a personal computer may pose a security risk, since the information can be exposed either unintentionally or as a result of malicious software.

What is needed are methods, apparatus and systems for increasing the security of cryptographic keys and cryptographic processes.

US 2010/0011211 A1 describes radio frequency identification (RFID) authentication systems and methods which include incorporating an identification device with an embedded RFID tag. The embedded RFID tag is associated with a specific user and stores a private key generated as part of a public key-private key encryption scheme. The private key is read by an RFID reader and used to decode public key encrypted data stored within or accessible by a computer system.

Sinclair S. et al. : "PorKI: Making User PKI Safe on Machines of Heterogeneous Trustworthiness", 21. Annual Computer Security Applications Conference, Tucson, AZ, USA, 05-09 December 2005, Piscataway, NJ, USA, IEEE, pages 419-430 describes a software application (PorKI) for mobile devices for enabling a user to employ her PKI credentials on Bluetooth-enabled workstations through the use of temporary keypairs, proxy certificates, and wireless protocols, wherein the mobile device generates a temporary keypair and a proxy certificate testifying to the public key of the temporary keypair and transfers them to the workstation via a Bluetooth connection.

According to the invention, there are provided a method of providing encrypted communication as defined by independent claim 1, an NFC-enabled communication device as defined by independent claim 10, and a system for encrypted communication as defined by independent claim 15.

Further advantageous features of the invention are defined by the dependent claims.

Advantageously, the method further comprises:
harvesting energy from an energization field prior to transmitting.

Advantageously, the second NFC-enabled communication device is disposed so as to be in wired communication with the computational platform.

Advantageously, the second NFC-enabled communication device is disposed within the computational platform.

Advantageously, the computational platform further executes program code to provide the functionality of an email client.

Advantageously, the computational platform further executes program code to provide access to an email client.

Advantageously, the cryptographic process decrypts an encrypted email message to produce a plain text version of the encrypted email message.

Advantageously, the cryptographic process signs a plain text email message to produce a cipher text version of the plain text email message.

Advantageously, the NFC communication device further comprises:
an energy harvesting circuit coupled to the NFC modem.

Advantageously, the computational resource is disposed within the NFC communication device.

Advantageously, the computational resource is physically disposed external to the NFC communication device, and is communicatively coupled to the NFC communication device.

Advantageously, the NFC communication device further comprises a memory for storing one or more symmetric key, the symmetric key suitable for use in a symmetric key cryptographic process.

Advantageously, the first NFC communications device further comprises an energy harvesting circuit, the energy harvesting circuit coupled to the first memory, the memory access controller, and the first NFC modem.

Advantageously, the first NFC communications device is disposed within smart card.

Advantageously, the first NFC communications device is putting things back where they belong once done with themdisposed within a mobile phone.

Advantageously, the first NFC communications device further comprises a second memory, the second memory having stored therein at least one public key.

Advantageously, the encrypted communication is encrypted email.

Advantageously, the encrypted email is encrypted using a public key cryptography process.

Advantageously, the public key cryptography process is PGP.

### BRIEF DESCRIPTIONS OF THE DRAWINGS

Embodiments of the invention are described with reference to the accompanying drawings. In the drawings, like reference numbers indicate identical or functionally similar elements. Additionally, the left most digit(s) of a reference number identifies the drawing in which the reference number first appears.

Fig. 1 is a block diagram illustrating a near field communication (NFC) environment in accordance with the present invention.

Fig. 2 is a high-level block diagram illustrating a public key based process for encrypting a document by a sender and decrypting the document by the recipient.

Fig. 3 is a high-level block diagram illustrating a public key based process for digitally signing a document by a sender and verifying that the document was signed by the purported sender.

Fig. 4 is a high-level block diagram illustrating another public key based process for digitally signing a document by a sender and verifying that the document was signed by the purported sender.

Fig. 5 is a block diagram of an NFC-enabled device showing the portions of the device relevant to the use of encrypted email in accordance with the present invention.

Fig. 6 is a block diagram of another NFC-enabled device showing the portion of the device relevant to the use of encrypted email in accordance with the present invention.

Fig. 7 is a block diagram of another NFC-enabled device showing the portion of the device relevant to the use of encrypted email in accordance with the present invention.

Fig. 8 is a block diagram of an illustrative system showing a first NFC-enabled device having both key storage and energy harvesting circuitry therein, and an NFC-enabled computational platform having an energization field generator and further coupled to storage media having various program codes stored thereon.

The invention will now be described with reference to the accompanying drawings. In the drawings, like reference numbers generally indicate identical, functionally similar, and/or structurally similar elements. The drawing in which an element first appears is indicated by the leftmost digit(s) in the reference number.

### DETAILED DESCRIPTION

The following Detailed Description refers to accompanying drawings to illustrate exemplary embodiments consistent with the invention. References in the Detailed Description to "one exemplary embodiment," "an illustrative embodiment", "an exemplary embodiment," and so on., indicate that the exemplary embodiment described may include a particular feature, structure, or characteristic, but every exemplary embodiment may not necessarily include the particular feature, structure, or characteristic. Moreover, such phrases are not necessarily referring to the same exemplary embodiment. Further, when a particular feature, structure, or characteristic is described in connection with an exemplary embodiment, it is within the knowledge of those skilled in the relevant art(s) to affect such feature, structure, or characteristic in connection with other exemplary embodiments whether or not explicitly described.

The exemplary embodiments described herein are provided for illustrative purposes, and are not limiting. Other exemplary embodiments are possible, and modifications may be made to the exemplary embodiments within the scope of the invention. Therefore, the Detailed Description is not meant to limit the invention. Rather, the scope of the invention is defined only in accordance with the following claims.

The following Detailed Description of the exemplary embodiments will so fully reveal the general nature of the invention that others can, by applying knowledge of those skilled in relevant art(s), readily modify and/or adapt for various applications such exemplary embodiments, without undue experimentation, without departing from the scope of the invention. Therefore, such adaptations and modifications are intended to be within the meaning and plurality of equivalents of the exemplary embodiments based upon the teaching and guidance presented herein. It is to be understood that the phraseology or terminology herein is for the purpose of description and not of limitation, such that the terminology or phraseology of the present specification is to be interpreted by those skilled in relevant art(s) in light of the teachings herein.

### Terminology

The term "keyring" refers to a file that stores keys, typically in encrypted form. In public key cryptography, public and/or private keys may be stored on one or more keyrings.

The term "passphrase" refers to a text string that is similar to a password but is typically significantly longer and made of a series of words.

The expression "email client" refers to a computer program that manages the email messages of an email user.

As used herein, the term "transceiver" refers to circuitry including a transmitter and a receiver such that a transceiver may be used to both transmit and receive information. In various implementations of the present invention, a transceiver may be operable in a half-duplex mode, a full-duplex mode, or both. It is noted that a transceiver may be implemented without any requirement of integration on a single die, and the present invention is not limited to any particular partitioning of transceiver functionality amongst any particular number of components. In typical embodiments, transceivers are formed on a single die.

The terms, chip, die, integrated circuit, semiconductor device, and microelectronic device, are often used interchangeably in the field of electronics. The present invention is applicable to all the above as these terms are generally understood in the field.

With respect to chips, it is common that power, ground, and various signals may be coupled between them and other circuit elements via physical, electrically conductive connections. Such a point of connection may be referred to as an input, output, input/output (I/O), terminal, line, pin, pad, port, interface, or similar variants and combinations. Although connections between and amongst chips are commonly made by way of electrical conductors, those skilled in the art will appreciate that chips and other circuit elements may alternatively be coupled by way of optical, mechanical, magnetic, electrostatic, and electromagnetic interfaces.

The term "smartcard" refers to a physical substrate, such as a credit card sized piece of plastic, having an integrated circuit embedded therein. Typically, smartcards are used for financial transactions or secure access to locked facilities. An active smartcard is one that includes an embedded power supply such as a battery. A passive smartcard is one that requires power to be supplied from an external source. In some instances the external source is an energization field from which the passive smartcard harvests the energy needed to carry out its desired function.

AN ILLUSTRATIVE NEAR FIELD COMMUNICATIONS ENVIRONMENT

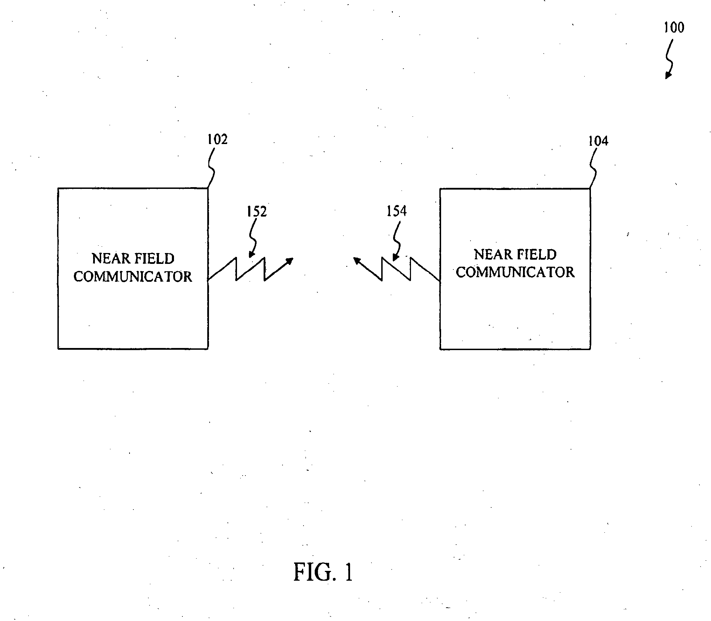

Fig. 1 is a block diagram showing an NFC environment in accordance with the present invention. An NFC environment 100 provides wireless communication of information among a first device 102 and a second device 104 that are sufficiently proximate to each other. The information may include one or more commands to be executed by first NFC device 102 and/or second NFC device 104, data from one or more data storage devices that is to be transferred to first NFC device 102 and/or second NFC device 104, or any combination thereof. The data storage devices may include one or more contactless transponders, one or more contactless tags, one or more contactless smartcards, any other machine-readable media that will be apparent to those skilled in the relevant art(s) without departing from the scope of the invention, or any combination thereof. Other machine-readable media may include non-transitory storage media, such as but not limited to, volatile memory, e.g., random access memory (RAM); non-volatile memory, e.g., read only memory (ROM), flash memory, magnetic disk storage media, and optical storage media. Still other machine readable media may include electrical, optical, acoustical or other forms of propagated signals such as carrier waves, infrared signals, and digital signals to provide some examples.

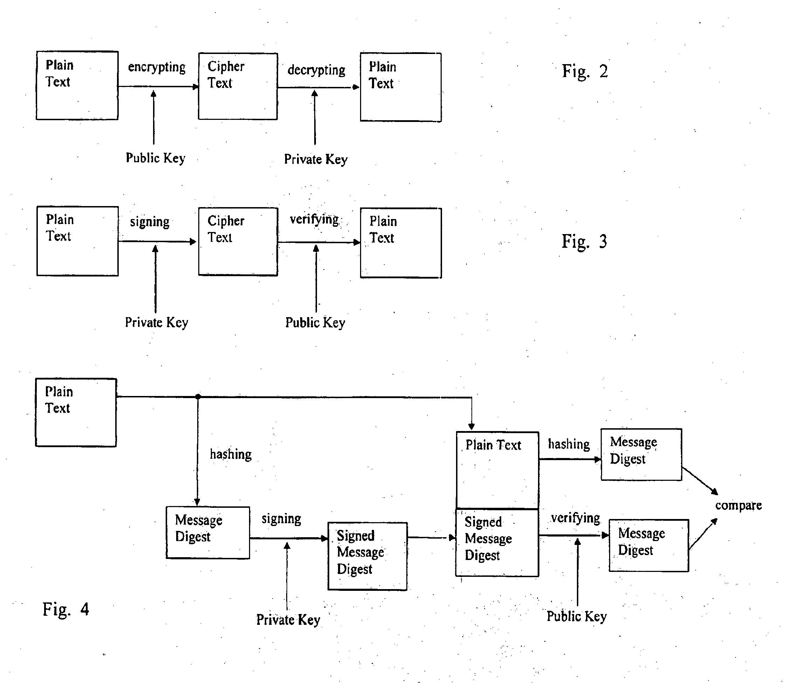

Fig. 2 shows a high-level block diagram illustrating a public key based process for encrypting a document by a sender and decrypting the document by the recipient. Public key cryptography systems are well established in the field of secure communications. In a public key based cryptography system, a pair of keys are generated, and this pair of keys is referred to as the public key/private key pair. In public key cryptography, the encryption/decryption algorithm and the public key are known, and only the private key is secret. Subsequent to generation of the public/private key pair and publication or distribution of the public key, a sender can encrypt a message (the plain text) using one of the keys to produce an encrypted message (the cipher text) and the receiver can decrypt the cypher text using the other key to reproduce the plain text. Anyone in the public can use the public key to encrypt a message and send it the holder of the private key (i.e. the recipient). Only the private key can decrypt the cipher text. The private key is then used to decrypt the cipher text to produce the desired message. Because the public key and private key of the key pair are different, public key cryptography is referred to as an asymmetric key system. It will be appreciated that the transmission of the cipher text to the recipient may be achieved by any suitable methods and apparatus for sending messages. By way of example and not limitation, an encrypted email message is typically sent over the Internet to the recipient.

Fig. 3 is a high-level block diagram illustrating a public key based process for digitally signing a document by a sender system and verifying at a recipient system that the document was actually signed by the purported sender system. In this case, the plain text is signed (i.e., encrypted) with the sender system's private key, and the signed message is sent to the recipient system. At the recipient system, the signed document is verified by performing the decryption process with the public key of the public/private key pair. Since only the public key of the public/private key pair can decrypt the signed document, a successful decryption of the document verifies that the signed message was sent by the holder of the private key of the public/private key pair. It will be appreciated that the transmission of the signed message to the recipient system may be achieved by any suitable methods and apparatus for sending messages. By way of example and not limitation, a signed email message is typically sent over the Internet to the recipient system.

Fig. 4 is a high-level block diagram illustrating another public key based process for digitally signing a document by a sender and verifying that the document was signed by the purported sender. In this case, the plain text is subjected to a hashing process to produce a "message digest". The message digest is unique to the plain text that was hashed. The message digest is then signed (i.e., encrypted) with the sender's private key. A copy of the plain text together with the signed message digest is then sent to the recipient. The recipient then: (a) subjects the received plain text to the same hashing process to produce a new version of the message digest; (b) verifies the signed message digest with the public key, thereby producing a plain text version of the sender's message digest; (c) compares the newly produced message digest with the plain text version of the sender's message digest; and (d) if the newly produced message digest and the plain text version of the sender's message digest match, then the recipient recognizes the plain text as having actually come from the sender and not from an impostor, and also recognizes that the plain text message has not been tampered with.

All of the examples of public key cryptography given above require the use of a private key, which is kept secret, and a public key which is published or otherwise distributed to potential recipients. It is noted that public key cryptography is suitable for application to digital information regardless of the meaning of the content. In other words, whether the plain text represents an email, a word processing document, or random information, is not material to the cryptographic process.

OVERVIEW OF AN NFC-ENABLED DEVICE FOR SECURE EMAIL

As mentioned above, improvements in manufacturing technologies and digital architecture have resulted in a number of products and product categories that were not previously practical or possible to implement. The emerging developments in the area of Near Field Communication (NFC) circuits, systems and applications is making new products and product categories possible. Products incorporating NFC communication capabilities are sometimes referred to in this field as NFC-enabled. For example, mobile phones, smart cards or other electronic products that include NFC communication capabilities are referred to as NFC-enabled. NFC communication allows two similarly equipped devices to exchange data with each other over short distances. Although a strict definition for the range of short distances is not agreed upon in the field, short range for NFC usually is thought of as being less than 4 cm, or within one wavelength of the selected communication frequency.

Various embodiments of the present invention advantageously utilize NFC communication to provide methods, apparatus and systems for increasing the security of cryptographic keys and cryptographic processes.

For the encryption and decryption of a message, public key cryptography requires the use of a pair of keys, i.e., the public key and the private key. Various embodiments of the present invention provide storage of information needed for one or more aspects of encrypting and/or decrypting messages, wherein that information is made available through an NFC communications interface. In specific illustrative embodiments, an NFC-enabled device is brought into physical proximity with a computational platform that is executing, or otherwise providing access to, an email client. Once the NFC-enabled device and the computational platform are within NFC communication range of each other, an exchange of the information needed to set up an encryption and/or decryption process takes place. Since, in accordance with the present invention, the encryption/decryption keys and/or related cryptographic process parameters are not stored on the computational platform where they are subject to disclosure (intentional or inadvertent), the security of this information is improved.

In typical embodiments of the present invention, the cryptographic process is a public key process. In some embodiments, PGP public key encryption/decryption is used. In various embodiments the NFC-enabled device provides information and/or instructions for setting up encrypted communication. In some of these embodiments the encrypted communication is encrypted email. In some embodiments the encrypted communication is PGP encrypted email.

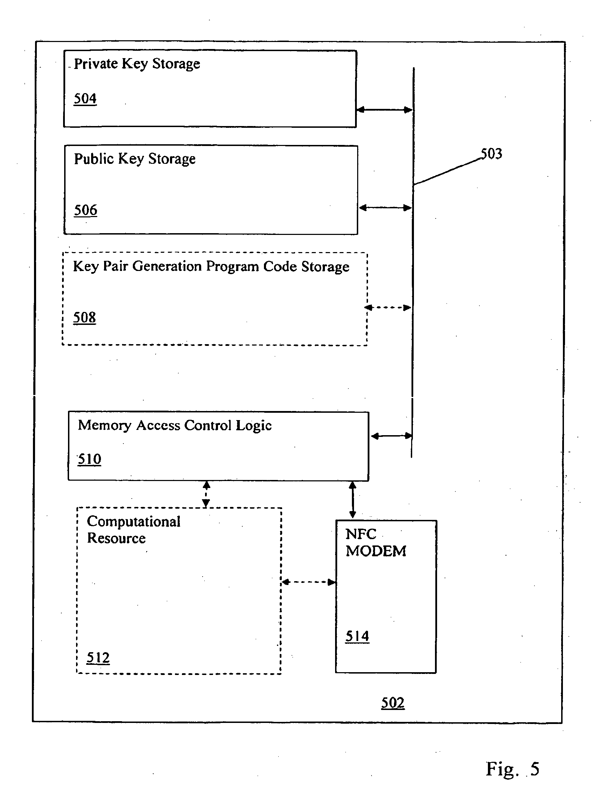

Fig. 5 shows a block diagram of an NFC-enabled device **502** illustrating the portions of device **502** that are relevant to the use of encrypted email in accordance with the present invention. NFC-enabled device **502** includes a Private Key Storage **504,** a Public Key Storage **506,** an optional Key Pair Generation Program Code Storage **508,** Memory Access Control Logic **510,** an optional Computational Resource **512,** and an NFC Modem **514.** NFC-enabled device **502** also includes a bus **503** over which Private Key Storage **504,** Public Key Storage **506,** optional Key Pair Generation Program Code Storage **508,** and Memory Access Control Logic **510** are able to communicate. It is noted that alternative arrangements in which the blocks may communicate via dedicated pathways rather than over a shared bus are may also be implemented in accordance with the present invention.

Storage blocks **504, 506** and **508** may be implemented with any suitable type of memory circuitry. In typical embodiments, storage blocks **504, 506** and, if present, **508** are non-volatile memories. Non-volatile memories have the characteristic of retaining the contents stored therein even when no power is applied to those memories. There are a number of types of non-volatile memory including, but are not limited to, flash memory, Read Only Memory (ROM), one-time programmable memory, fuse programmable memory, anti-fuse programmable memory, laser programmable memory, electrically alterable read only memory; and so on.

In this illustrative embodiment, NFC Modem **514** includes transmitter and receiver circuitry. It will be appreciated that in various embodiments of the present invention, NFC Modem **514** may further include circuitry for one or more control functions, such as but not limited to NFC communication protocols and hand-shaking sequences.

NFC-enabled device **502** may be, but is not limited to, products such as a smart card, a mobile phone, a smart phone, an electronic key fob, a keyless security access card, a tablet computer, and so on.

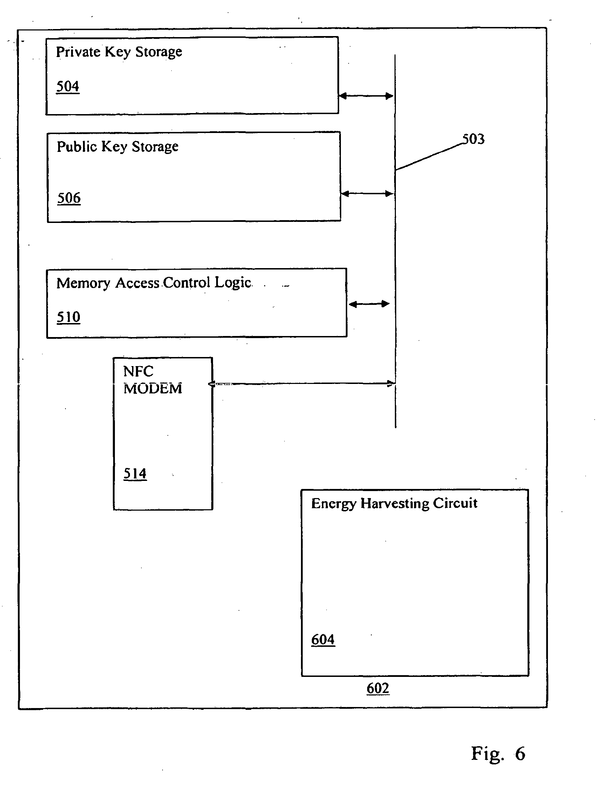

Fig. 6 is a block diagram of another illustrative NFC-enabled device **602** showing the portions of device **602** that are relevant to the use of encrypted email in accordance with the present invention. NFC-enabled device **602** of Fig. 6 is similar to NFC-enabled device **502,** except the optional computational resource and optional program code for key pair generation is not included in this figure, and an energy harvesting circuit **604** has been added. Various energy harvesting circuits are known in the art, and are commonly used in connection with RFID devices. Embodiments of the present invention may be configured with one or more energy harvesting circuits. In further alternative embodiments, various ones of a plurality of energy harvesting circuits may be constructed with different circuits, different circuit technologies, different power output characteristics, and/or different energizing sources. Energizing sources may include, but are not limited to, electromagnetic fields, magnetic fields, and thermal gradients (for use with thermoelectric power generation materials).

Still referring to Fig. 6, it is noted that energy harvesting circuit **604** is coupled to the other blocks **504, 506, 510** and **514** of NFC-enabled device **602** by pathways (not shown) formed from electrically conductive material.

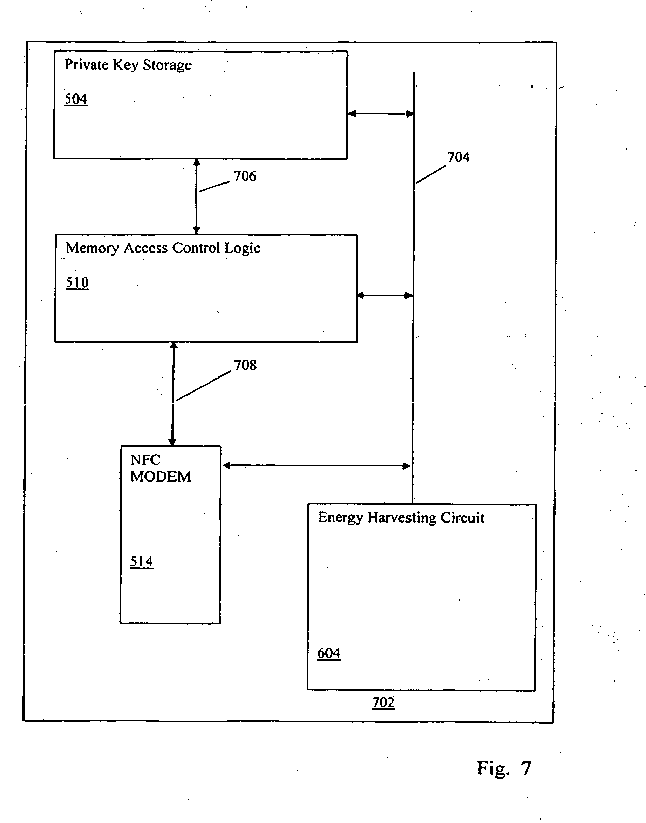

Fig. 7 is a block diagram of another illustrative NFC-enabled device **702** showing the portions of device **702** that are relevant to the use of encrypted email in accordance with the present invention. NFC-enabled device **702** includes a Private Key Storage **504,** Memory Access Control Logic **510,** an NFC Modem **514,** and an Energy Harvesting Circuit **604.** Energy Harvesting Circuit **604** provides power to Private Key Storage **504,** Memory Access Control Logic **510,** an NFC Modem **514** over power bus **704.** It will be appreciated that power bus **704** may include a plurality of electrically conductive interconnect lines, wherein each of those lines is coupled to one of the power supply nodes. By way of example, and not limitation, power bus may include a ground line and a positive voltage supply line. In alternative arrangements, Energy Harvesting Circuit 604 may produce a plurality of output supply voltages to accommodate the needs of the various other circuit blocks of NFC-enabled device **702.** In such alternative arrangements, power bus **704** includes a corresponding number of voltage supply lines in order to couple the voltage supply nodes with the block or blocks where the particular voltage supply is needed.

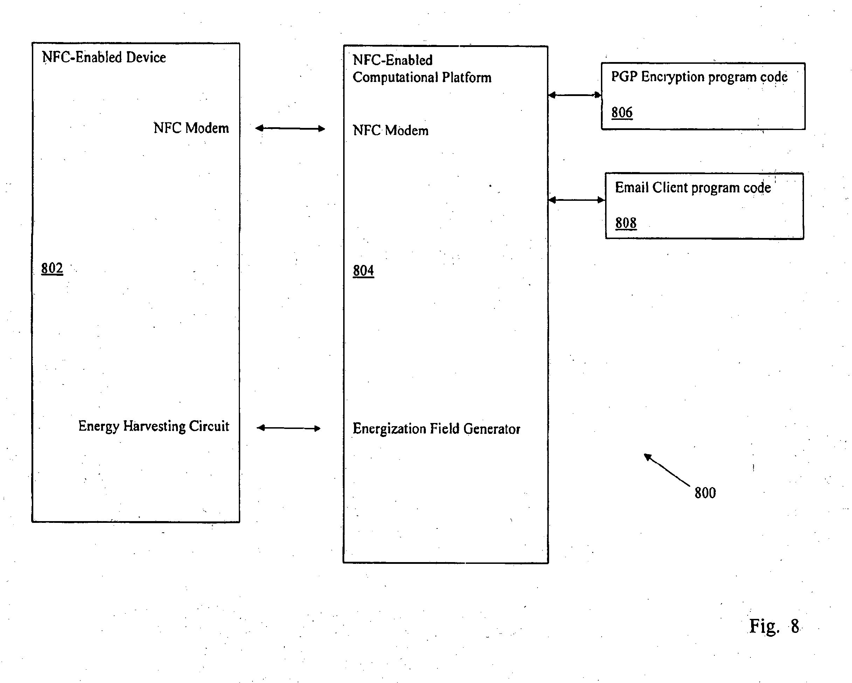

Fig. 8 is a block diagram of an illustrative system **800** showing a first NFC-enabled device **802** having both key storage and energy harvesting circuitry therein; and an NFC-enabled computational platform **804** having an energization field generator therein, and coupled to storage medium **806** having PGP encryption program codes stored thereon, and further coupled to storage medium **808** having email client program codes stored thereon. NFC-enabled device **802** may be part of, but not limited to, a smart card, a smart phone, a mobile phone, a tablet computer, and so on. NFC-enabled computational platform **804** may be, but is not limited to a personal computer, a smart phone, a mobile phone, a tablet computer, an email kiosk, and so on. It will be appreciated that PGP Encryption is a commercially available public key cryptographic product and that the present invention is not limited to the use of this particular public key cryptographic product. In various embodiments of the present invention, NFC communication between device **802** and computational platform **804** may include various protocol related steps prior to the transfer or communication of cryptographically relevant information.

It is noted that in addition to the storage of one or more private keys, NFC-enabled device **802** may also store, and make available to computational platform **804,** one or more public keys, one or more hash algorithm specifications or identifications, one or more pass phrases, and one or more cryptographic parameters including but not limited to key size. In this way, NFC-enabled device **802** is able to provide all the information needed to enable a cryptographic process to run on computational platform **804,** without those keys and other parameters being stored in, or wired to, computational platform **804.** Likewise, those keys and other parameters are not transmitted via an RF far field carrier where they could be intercepted. When those keys and/or other parameters are communicated to computational platform **804** it is only with a near-field communication which is less susceptible to interception than far field transmission, and only made available for a time period needed to perform a particular cryptographic task.

In some embodiments NFC-enabled device **802** discontinues communication of keys or cryptographic parameters after a predetermined amount of time. In other embodiments, the communication is discontinued after a predetermined amount of data transfers. In still other embodiments, a predetermined amount of time must elapse before NFC-enabled device **802** will engage in another exchange of cryptographically relevant information.

In one illustrative embodiment of the present invention, a method of providing encrypted communication, includes storing a private key of a public key/private key pair in a first memory of a first NFC-enabled communication device, and transmitting the private key, by near field communication, to a second NFC-enabled communication device, the second NFC-enabled communication device disposed so as to be in communication with a computational platform, wherein the computational platform executes program code that uses the private key received from the first NFC-enabled communication device in a cryptographic process. In some embodiments the cryptographic process is PGP public key cryptography. In various embodiments, the first memory may be a non-volatile memory, the computational platform may be a personal computer, a smart phone, a tablet computer, or a similar device operable to send or receive email. In another embodiment, the method of providing encrypted communication includes harvesting energy from an energization field prior to transmitting. In still other embodiments the second NFC-enabled communication device is disposed so as to be in wired communication with the computational platform, and may be disposed within the computational platform. In still further embodiments the computational platform executes program code to provide the functionality of an email client, while in other embodiments the computational platform executes program code to provide access to an email client.

In another illustrative embodiment of the present invention, a method of providing encrypted communication, includes receiving, at an NFC-enabled computational platform, a private key, by near field communication, executing, at the computational platform, program code that provides an email client, and executing, at the computational platform, program code that uses the private key in a cryptographic process. In some embodiments the cryptographic process decrypts an encrypted email message using the private key to produce a plain text version of the encrypted email message. In other embodiments the cryptographic process signs a plain text email message using the private key to produce a cipher text version of the plain text email message.

In one embodiment of the present invention, an NFC communication device, includes a first memory, the first memory having stored therein at least one private key; a second memory, the second memory having stored therein at least one public key; a third memory, the third memory having stored therein at least one pass phrase; a memory access controller coupled to the first memory, the second memory and the third memory; and an NFC modem coupled to the memory access controller. The first, second and third memories are typically non-volatile memories. The first, second and third memories may be integrated on a single chip, on separate chips, or partitioned in any suitable manner. The first, second and third memories may be implemented with the same or different manufacturing technologies. The first, second and third memories may be addressable regions of a logically contiguous memory array. Other embodiments further include at least one energy harvesting circuit coupled to the NFC modem. Still other embodiments include a fourth memory, the fourth memory storing program code which when executed by a computational resource causes the computational resource to generate a private key/public key pair.

In one embodiment of the present invention, a system for encrypted communication, includes a first NFC communications device that includes a first memory, the first memory having stored therein at least one private key, a memory access controller coupled to the first memory; and a first NFC modem coupled to the memory access controller; and a computational platform configured to execute program code, the computational platform including a machine readable storage medium having stored thereon program code that when executed causes the computational platform to provide an email client, and further including a second NFC communications device; wherein the first NFC communications device, and the second NFC communications device of the computational platform, must be disposed in a predetermined spatial relationship to each other such that near-field communication between the first NFC communications device and the second NFC communications is enabled. In some embodiments the first NFC communications device further includes an energy harvesting circuit, the energy harvesting circuit coupled to the first memory, the memory access controller, and the first NFC modem. In some of these embodiments the first NFC communications device is disposed within smart card. In other embodiments the first NFC communications device is disposed within a product that such as, but not limited to, mobile phones, smart phones, tablet computers, or other products that include a power supply including but not limited to a battery. In various embodiments the first NFC communications device further includes a second memory, the second memory having stored therein at least one public key. It is noted that various embodiments of the present invention are suitable for conducting encrypted email communication, wherein the encrypted email is encrypted using a public key cryptography process. In some of these embodiments the public key cryptography process is PGP.

In various embodiments, the NFC communication device may include a computational resource disposed within itself. By way of example and not limitation, the NFC communnication device may be implemented as an integrated circuit chip that includes a processor core (i.e., a computational resource). In other embodiments, the computational resource may be physically disposed external to the NFC communication device but communicatively coupled thereto. Alternatively, computational resources may be disposed both within the NFC communication device, and physically external/communicatively coupled to the NFC communication device. Still other embodiments may include one or more memories for storing one or more symmetric keys, where the symmetric keys are suitable for use in a symmetric key cryptographic process.

It is noted that NFC-enabled devices such as those described herein may also include other cryptographic information, such as, but not limited to, one or more keys for alternative encryption schemes. For example one or more symmetric keys may be stored in the NFC-enabled device for use with a symmetric key algorithm such as but not limited to DES. Variations of the basic DES algorithm such as cipher feedback, cipher block chaining, and triple-DES have been used to extend the effectiveness of this symmetric key algorithm.

### CONCLUSION

It is to be appreciated that the Detailed Description section, and not the Abstract of the Disclosure, is intended to be used to interpret the claims. The Abstract of the Disclosure may set forth one or more, but not all exemplary embodiments, of the invention, and thus, is not intended to limit the invention and the subjoined claims in any way.

The invention has been described above with the aid of functional building blocks illustrating the implementation of specified functions and relationships thereof. The boundaries of these functional building blocks have been arbitrarily defined herein for the convenience of the description. Alternate boundaries may be defined so long as the specified functions and relationships thereof are appropriately performed.

It will be apparent to those skilled in the relevant art(s) that various changes in form and detail can be made therein without departing from the scope of the invention. Thus the invention should not be limited by any of the above-described exemplary embodiments, but should be defined only in accordance with the subjoined claims.

## Claims

1. A method of providing encrypted communication, comprises:
generating a private key/public key pair by a computational resource (512) disposed within a first NFC-enabled communication device (102, 502, 602, 702, 802);
storing a private key of the public key/private key pair in a first memory (504) of the first NFC-enabled communication device (102, 502, 602, 702, 802); and
transmitting the private key, by near field communication, to a second NFC-enabled communication device (104), the second NFC-enabled communication device (104) disposed so as to be in communication with a computational platform (804);
wherein the computational platform (804) executes program code that uses the private key received from the first NFC-enabled communication device (102, 502, 602, 702, 802) in a cryptographic process.

2. The method of claim 1, further comprising:
harvesting energy from an energization field prior to transmitting.

3. The method of claim 1, wherein the second NFC-enabled communication device (104) is disposed so as to be in wired communication with the computational platform (804).

4. The method of claim 3, wherein the second NFC-enabled communication device (104) is disposed within the computational platform (804).

5. The method of claim 1, wherein the computational platform (804) further executes program code to provide the functionality of an email client.

6. The method of claim 1, wherein the computational platform (804) further executes program code to provide access to an email client.

7. The method of claim 1, comprising:
receiving, at an NFC-enabled computational platform (804), the private key, by near field communication;
executing, at the computational platform (804), program code that provides an email client; and
executing, at the computational platform (804), program code that uses the private key in a cryptographic process.

8. The method of claim 7, wherein the cryptographic process decrypts an encrypted email message to produce a plain text version of the encrypted email message.

9. The method of claim 7, wherein the cryptographic process signs a plain text email message to produce a cipher text version of the plain text email message.

10. An NFC-enabled communication device (102, 502, 602, 702, 802), comprising:
a first memory (504), the first memory having stored therein at least one private key;
a second memory (506), the second memory having stored therein at least one public key;
a third memory, the third memory having stored therein at least one pass phrase;
a fourth memory (508), the fourth memory storing program code which when executed by a computational resource (512) causes the computational resource (512) to generate a private key/public key pair;
a memory access controller (510) coupled to the first memory (504), the second memory (506), the third memory, and the fourth memory (508); and
an NFC modem coupled to the memory access controller (510).

11. The NFC-enabled communication device of claim 10, further comprising:
an energy harvesting circuit coupled to the NFC modem.

12. The NFC-enabled communication device of claim 10, wherein the computational resource (512) is disposed within the NFC-enabled communication device (102, 502, 602, 702, 802).

13. The NFC-enabled communication device of claim 10, wherein the computational resource (512) is physically disposed external to the NFC-enabled communication device (102, 502, 602, 702, 802), and is communicatively coupled to the NFC-enabled communication device (102, 502, 602, 702, 802).

14. The NFC-enabled communication device of claim 10, further including a memory for storing one or more symmetric key, the symmetric key suitable for use in a symmetric key cryptographic process.

15. A system for encrypted communication, comprising:
the NFC-enabled communication device of claim 10; and
a computational platform (804) configured to execute program code, the computational platform (804) including a machine readable storage medium having stored thereon program code that when executed causes the computational platform (804) to provide an email client, and further including a second NFC-enabled communications device (104);
wherein the first NFC-enabled communications device (102, 502, 602, 702, 802), and the second NFC-enabled communication device (104) of the computational platform (804),
are disposed in a predetermined spatial relationship to each other such that near-field communication between the first NFC-enabled communications device (102, 502, 602, 702, 802) and the second NFC communications is enabled.

## Patentansprüche

1. Verfahren zum Bereitstellen verschlüsselter Kommunikation, das umfasst:
Erzeugen eines privater Schlüssel/öffentlicher Schlüssel-Paars durch eine Rechenressource (512), die sich in einem ersten NFC-fähigen Kommunikationsgerät (102, 502, 602, 702, 802) befindet;
Speichern eines privaten Schlüssels des privater Schlüssel/öffentlicher Schlüssel-Paars in einem ersten Speicher (504) des ersten NFC-fähigen Kommunikationsgeräts (102, 502, 602, 702, 802); und
Senden des privaten Schlüssels durch Nahfeldkommunikation an ein zweites NFC-fähiges Kommunikationsgerät (104), wobei das zweite NFC-fähige Kommunikationsgerät (104) so angeordnet ist, dass es mit einer Rechenplattform (804) in Kommunikation ist;
wobei die Rechenplattform (804) Programmcode, der den von dem ersten NFC-fähigen Kommunikationsgerät (102, 502, 602, 702, 802) empfangenen privaten Schlüssel verwendet, in einem kryptografischen Verfahren ausführt.

2. Verfahren nach Anspruch 1, das des Weiteren umfasst:
Entnehmen von Energie aus einem Speisungsfeld vor dem Senden.

3. Verfahren nach Anspruch 1, wobei das zweite NFC-fähige Kommunikationsgerät (104) so angeordnet ist, dass es in drahtgebundener Kommunikation mit der Rechenplattform (804) ist.

4. Verfahren nach Anspruch 3, wobei das zweite NFC-fähige Kommunikationsgerät (104) in der Rechenplattform (804) angeordnet ist.

5. Verfahren nach Anspruch 1, wobei die Rechenplattform (804) des Weiteren Programmcode ausführt, um die Funktionalität eines E-Mail-Client bereitzustellen.

6. Verfahren nach Anspruch 1, wobei die Rechenplattform (804) des Weiteren Programmcode ausführt, um Zugriff auf einen E-Mail-Client bereitzustellen.

7. Verfahren nach Anspruch 1, das umfasst:
Empfangen, an einer NFC-fähigen Rechenplattform (804), des privaten Schlüssels durch Nahfeldkommunikation;
Ausführen, an der Rechenplattform (804), von Programmcode, der einen E-Mail-Client bereitstellt; und
Ausführen von Programmcode, der den privaten Schlüssel verwendet, in einem kryptografischen Verfahren an der Rechenplattform (804),

8. Verfahren nach Anspruch 7, wobei das kryptografische Verfahren eine verschlüsselte E-Mail-Nachricht entschlüsselt, um eine Klartextversion der verschlüsselten E-Mail-Nachricht zu erzeugen.

9. Verfahren nach Anspruch 7, wobei das kryptografische Verfahren eine Klartext-E-Mail-Nachricht signiert, um eine chiffrierte Textversion der Klartext-E-Mail-Nachricht zu erzeugen.

10. NFC-fähiges Kommunikationsgerät (102, 502, 602, 702, 802), das aufweist:
einen ersten Speicher (504), wobei in dem ersten Speicher wenigstens ein privater Schlüssel gespeichert ist;
einen zweiten Speicher (506), wobei in dem zweiten Speicher wenigstens ein öffentlicher Schlüssel gespeichert ist;
einen dritten Speicher, wobei in dem dritten Speicher wenigstens eine Passphrase gespeichert ist;
einen vierten Speicher (508), wobei der vierte Speicher Programmcode speichert, welcher, wenn er von einer Rechenressource (512) ausgeführt wird, veranlasst, dass die Rechenressource (512) ein privater Schlüssel/öffentlicher Schlüssel-Paar erzeugt;
einen Speicherzugriffs-Controller (510), der mit dem ersten Speicher (504), dem zweiten Speicher (506), dem dritten Speicher und dem vierten Speicher (508) verbunden ist; und
ein NFC-Modem, das mit dem Speicherzugriffs-Controller (510) verbunden ist.

11. NFC-fähiges Kommunikationsgerät nach Anspruch 10, das des Weiteren aufweist:
eine Energieentnahmeschaltung, die mit dem NFC-Modem verbunden ist.

12. NFC-fähiges Kommunikationsgerät nach Anspruch 10, wobei die Rechenressource (512) in dem NFC-fähigen Kommunikationsgerät (102, 502, 602, 702, 802) angeordnet ist.

13. NFC-fähiges Kommunikationsgerät nach Anspruch 10, wobei die Rechenressource (512) physikalisch außerhalb des NFC-fähigen Kommunikationsgeräts (102, 502, 602, 702, 802) angeordnet ist und kommunikativ mit dem NFC-fähigen Kommunikationsgerät (102, 502, 602, 702, 802) verbunden ist.

14. NFC-fähiges Kommunikationsgerät nach Anspruch 10, das des Weiteren einen Speicher zum Speichern eines oder mehrerer symmetrischer Schlüssel aufweist, wobei der symmetrische Schlüssel zur Verwendung bei einem kryptografischen Verfahren mit symmetrischem Schlüssel verwendbar ist.

15. System für verschlüsselte Kommunikation, das aufweist:
das NFC-fähige Kommunikationsgerät nach Anspruch 10; und
eine Rechenplattform (804), die dazu konfiguriert ist, Programmcode auszuführen, wobei die Rechenplattform (804) ein maschinenlesbares Speichermedium aufweist, auf dem Programmcode gespeichert ist, welcher, wenn er ausgeführt wird, veranlasst, dass die Rechenplattform (804) einen E-Mail-Client bereitstellt, und die des Weiteren ein zweites NFC-fähiges Kommunikationsgerät (104) aufweist;
wobei das erste NFC-fähige Kommunikationsgerät (102, 502, 602, 702, 802) und das zweite NFC-fähige Kommunikationsgerät (104) der Rechenplattform (804) in einer vorgegebenen räumlichen Beziehung zueinander angeordnet sind, so dass Nahfeldkommunikation zwischen dem ersten NFC-fähigen Kommunikationsgerät (102, 502, 602, 702, 802) und den zweiten NFC-Kommunikationen ermöglicht wird.

## Revendications

1. Procédé de fourniture de communication cryptée, comprenant :
la génération d'une paire clé privée/clé publique par une ressource (512) de calcul disposée au sein d'un premier dispositif (102, 502, 602, 702, 802) de communication compatible NFC ;
le stockage d'une clé privée de la paire clé privée/clé publique dans une première mémoire (504) du premier dispositif (102, 502, 602, 702, 802) de communication compatible NFC ; et
la transmission de la clé privée, par communication en champ proche, à un deuxième dispositif (104) de communication compatible NFC, le deuxième dispositif (104) de communication compatible NFC disposé de façon à être en communication avec une plate-forme (804) de calcul ;
dans lequel la plate-forme (804) de calcul exécute un code de programme qui utilise la clé privée reçue du premier dispositif (102, 502, 602, 702, 802) de communication compatible NFC dans un processus cryptographique.

2. Procédé selon la revendication 1, comprenant en outre :
la récupération d'énergie à partir d'un champ de couplage énergétique avant la transmission.

3. Procédé selon la revendication 1, dans lequel le deuxième dispositif (104) de communication compatible NFC est disposé de façon à être en communication câblée avec la plate-forme (804) de calcul.

4. Procédé selon la revendication 3, dans lequel le deuxième dispositif (104) de communication compatible NFC est disposé au sein de la plate-forme (804) de calcul.

5. Procédé selon la revendication 1, dans lequel la plate-forme (804) de calcul exécute en outre un code de programme pour fournir la fonctionnalité d'un client de courrier électronique.

6. Procédé selon la revendication 1, dans lequel la plate-forme (804) de calcul exécute en outre un code de programme pour fournir un accès à un client de courrier électronique.

7. Procédé selon la revendication 1, comprenant :
la réception, au niveau d'une plate-forme (804) de calcul compatible NFC, de la clé privée, par communication en champ proche ;
l'exécution, au niveau de la plate-forme (804) de calcul, d'un code de programme qui fournit un client de courrier électronique ; et
l'exécution, au niveau de la plate-forme (804) de calcul, d'un code de programme qui utilise la clé privée dans un processus cryptographique.

8. Procédé selon la revendication 7, dans lequel le processus cryptographique décrypte un message de courrier électronique crypté pour produire une version en texte clair du message de courrier électronique crypté.

9. Procédé selon la revendication 7, dans lequel le processus cryptographique signe un message de courrier électronique en texte clair pour produire une version en texte chiffré du message de courrier électronique en texte clair.

10. Dispositif (102, 502, 602, 702, 802) de communication compatible NFC, comprenant :
une première mémoire (504), la première mémoire ayant, stockée dans celle-ci, au moins une clé privée ;
une deuxième mémoire (506), la deuxième mémoire ayant, stockée dans celle-ci, au moins une clé publique ;
une troisième mémoire, la troisième mémoire ayant, stockée dans celle-ci, au moins une phrase de passe ;
une quatrième mémoire (508), la quatrième mémoire stockant un code de programme qui, lorsqu'il est exécuté par une ressource (512) de calcul, fait que la ressource (512) de calcul génère une paire clé privée/clé publique ;
un contrôleur (510) d'accès aux mémoires couplé à la première mémoire (504), la deuxième mémoire (506), la troisième mémoire, et la quatrième mémoire (508) ; et
un modem NFC couplé au contrôleur (510) d'accès aux mémoires.

11. Dispositif de communication compatible NFC selon la revendication 10, comprenant en outre :
un circuit de récupération d'énergie couplé au modem NFC.

12. Dispositif de communication compatible NFC selon la revendication 10, dans lequel la ressource (512) de calcul est disposée au sein du dispositif (102, 502, 602, 702, 802) de communication compatible NFC.

13. Dispositif de communication compatible NFC selon la revendication 10, dans lequel la ressource (512) de calcul est physiquement disposée extérieurement au dispositif (102, 502, 602, 702, 802) de communication compatible NFC, et est couplée en communication au dispositif (102, 502, 602, 702, 802) de communication compatible NFC.

14. Dispositif de communication compatible NFC selon la revendication 10, incluant en outre une mémoire pour stocker une clé symétrique ou plus, la clé symétrique appropriée à une utilisation dans un processus cryptographique à clé symétrique.

15. Système pour communication cryptée, comprenant :
le dispositif de communication compatible NFC selon la revendication 10 ; et
une plate-forme (804) de calcul configurée pour exécuter un code de programme, la plate-forme (804) de calcul incluant un support de stockage lisible par une machine ayant, stocké sur celui-ci, un code de programme qui, lorsqu'il est exécuté, fait que la plate-forme (804) de calcul fournit un client de courrier électronique, et incluant en outre un deuxième dispositif (104) de communications compatible NFC ;
dans lequel le premier dispositif (102, 502, 602, 702, 802) de communications compatible NFC et le deuxième dispositif (104) de communication compatible NFC de la plate-forme (804) de calcul sont disposés dans une relation spatiale prédéterminée l'un par rapport à l'autre de telle sorte qu'une communication en champ proche entre le premier dispositif (102, 502, 602, 702, 802) de communications compatible NFC et les deuxièmes communications NFC est possible.
